# EUROPEAN PATENT APPLICATION

(11) **EP 4 502 952 A1**
(43) Date of publication of application: **05.02.2025**
(21) Application number: 23799601.2
(22) Date of filing: 21.04.2023
(51) Int. Cl.: G06T 11/00, G06T 15/10, G06T 3/00, H04W 4/02, G06T 15/00

(54) **METHOD AND DEVICE FOR PROVIDING AR SPLIT RENDERING IN WIRELESS COMMUNICATION SYSTEM**

(30) Priority: 04.05.2022 KR 20220055320; 13.03.2023 KR 20230032622
(71) Applicant: Samsung Electronics Co., Ltd., Suwon-si, Gyeonggi-do 16677 (KR)
(72) Inventor: RHYU, Sungryeul, Suwon-si Gyeonggi-do 16677 (KR)
(74) Representative: Gulde & Partner
(86) International application number: PCT/KR2023/005485
(87) International publication number: WO 2023/214718

(57) **Abstract**

The present disclosure relates to a 5G or 6G communication system for supporting higher data transmission rates. According to various embodiments of the present disclosure, an operation method of a terminal in a wireless communication system is provided, the method comprising the steps of: receiving, from a server, information of a plurality of terminal prediction poses obtained by prediction, and information of a two-dimensional image projected from one prediction pose of the plurality of terminal prediction poses; selecting one prediction pose from among the plurality of terminal prediction poses; performing spatial geometric transformation on each part of the two-dimensional image in a three-dimensional space according to information of the selected prediction pose; and transforming, on the basis of a final terminal pose, the spatial geometric-transformed two-dimensional image from a space of the selected prediction pose to a space of the final terminal pose, thereby generating a final two-dimensional image.

## Description

### [Technical Field]

The disclosure generally relates to a wireless communication system (or mobile communication system). More particularly, the disclosure relates to a method and a device for providing AR split rendering in a wireless communication system.

### [Background Art]

5G mobile communication technologies define broad frequency bands to enable high transmission rates and new services, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

At the beginning of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multibeam transmission and broadbands, definition and operation of BWP (BandWidth Part), new channel coding methods such as a LDPC (Low Density Parity Check) code for large-capacity data transmission and a polar code for highly reliable transmission of control information, L2 preprocessing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

With the recent development of a communication system, various studies are being conducted to improve the efficiency of AR rendering.

### [Disclosure of Invention]

### [Technical Problem]

Based on the foregoing discussion, the disclosure is to provide a method and a device for providing AR split rendering in a wireless communication system.

### [Solution to Problem]

A method performed by a terminal according to an embodiment of the disclosure includes receiving, from a server, a scene description including information about a plurality of poses and a plurality of pieces of spatial geometric information corresponding to the plurality of poses, determining a pose closest to a final pose of the terminal among the plurality of poses, generating an image, based on spatial geometric information corresponding to the determined pose, and outputting the generated image.

A terminal according to another embodiment of the disclosure includes a transceiver and a controller connected to the transceiver, wherein the controller is configured to receive, from a server, a scene description including information about a plurality of poses and a plurality of pieces of spatial geometric information corresponding to the plurality of poses, determine a pose closest to a final pose of the terminal among the plurality of poses, generate an image, based on spatial geometric information corresponding to the determined pose, and output the generated image.

A method performed by a server according to still another embodiment of the disclosure includes generating information about a plurality of poses related to a predetermined object and a plurality of pieces of spatial geometric information corresponding to the plurality of poses to output an image to a terminal, and transmitting a scene description including the information about the plurality of poses and the plurality of pieces of spatial geometric information to the terminal, wherein the image is output based on spatial geometric information corresponding to a pose closest to a final pose of the terminal among the plurality of poses.

A server according to yet another embodiment of the disclosure includes a transceiver and a controller connected to the transceiver, wherein the controller is configured to generate information about a plurality of poses related to a predetermined object and a plurality of pieces of spatial geometric information corresponding to the plurality of poses to output an image to a terminal, and transmit a scene description including the information about the plurality of poses and the plurality of pieces of spatial geometric information to the terminal, and the image is output based on spatial geometric information corresponding to a pose closest to a final pose of the terminal among the plurality of poses.

### [Advantageous Effects of Invention]

Various embodiments of the disclosure may provide a method and a device for providing AR split rendering in a wireless communication system.

Advantageous effects obtainable from the disclosure may not be limited to the above-mentioned effects, and other effects which are not mentioned may be clearly understood from the following descriptions by those skilled in the art to which the disclosure pertains.

### [Brief Description of Drawings]

FIG. 1 illustrates a wireless communication system according to various embodiments of the disclosure;
FIG. 2 illustrates the configuration of a base station in a wireless communication system according to various embodiments of the disclosure;
FIG. 3 illustrates the configuration of a UE in a wireless communication system according to various embodiments of the disclosure;
FIG. 4 illustrates an extended example of a glTF 2.0 node tree structure in a wireless communication system according to various embodiments of the disclosure;
FIG. 5 illustrates an example of scene description mapping of an image and a pose in a wireless communication system according to various embodiments of the disclosure;
FIG. 6A illustrates an example of a UE-server- application provider (AP) structure in a wireless communication system according to various embodiments of the disclosure;
FIG. 6B is a flowchart illustrating an example of a method and procedure for providing a service in a wireless communication system according to various embodiments of the disclosure;
FIG. 7 illustrates an example of a profile identification method in a wireless communication system according to various embodiments of the disclosure;
FIG. 8 illustrates an example of three-dimensional stereoscopic content, a UE prediction pose, and a projection plane in a wireless communication system according to various embodiments of the disclosure;
FIG. 9 illustrates an example of a two-dimensional image in a wireless communication system according to various embodiments of the disclosure;
FIG. 10 illustrates an example of space-to-space transformation in a wireless communication system according to various embodiments of the disclosure;
FIG. 11 illustrates an example of space-to-space transformation after spatial geometric transformation in a wireless communication system according to various embodiments of the disclosure;
FIG. 12 illustrates an example of the operation of an animation node in a wireless communication system according to various embodiments of the disclosure; and
FIG. 13 illustrates an example of the operation of an animation node when latency occurs in a wireless communication system according to various embodiments of the disclosure.

### [Mode for the Invention]

The terms used in the disclosure are used merely to describe particular embodiments, and may not be intended to limit the scope of other embodiments. A singular expression may include a plural expression unless they are definitely different in a context. The terms used herein, including technical and scientific terms, may have the same meaning as those commonly understood by a person skilled in the art to which the disclosure pertains. Such terms as those defined in a generally used dictionary may be interpreted to have the meanings equal to the contextual meanings in the relevant field of art, and are not to be interpreted to have ideal or excessively formal meanings unless clearly defined in the disclosure. In some cases, even the term defined in the disclosure should not be interpreted to exclude embodiments of the disclosure.

Hereinafter, various embodiments of the disclosure will be described based on an approach of hardware. However, various embodiments of the disclosure include a technology that uses both hardware and software, and thus the various embodiments of the disclosure may not exclude the perspective of software.

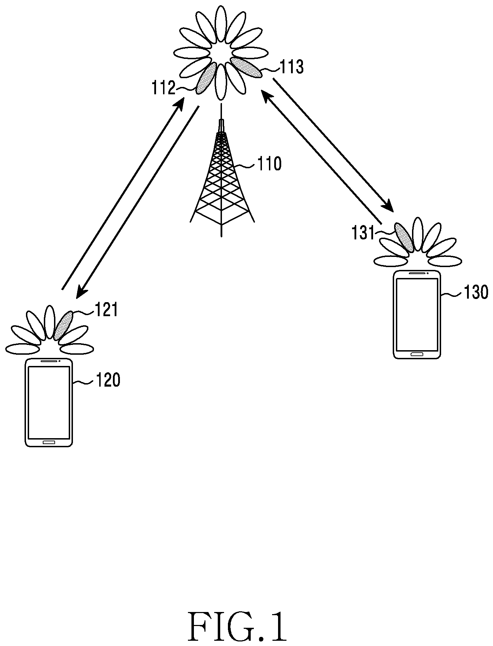

FIG. 1 illustrates a wireless communication system according to various embodiments of the disclosure. FIG. 1 illustrates a base station 110, a UE 120, and a UE 130 as some nodes using a wireless channel in the wireless communication system. Although FIG. 1 shows only one base station, another base station equivalent or similar to the base station 110 may be further included.

The base station 110 is a piece of network infrastructure that provides wireless access for the terminals 120 and 130. The base station 110 has coverage defined as a certain geographic area based on the distance over which the base station 110 can transmit a signal. The base station 110 may be referred to as an access point (AP), an eNodeB (eNB), a 5th-generation (5G) node, a next-generation nodeB (gNB), a wireless point, a transmission/reception point (TRP), or other terms with equivalent technical meanings, in addition to a base station.

Each of the UE 120 and the UE 130 is a device used by a user and performs communication with the base station 110 through a wireless channel. In some cases, at least one of the UE 120 and the UE 130 may be operated without a user's involvement. That is, at least one of the UE 120 and the UE 130 may be a device performing machine-type communication (MTC), and may not be carried by a user. Each of the UE 120 and the UE 130 may be referred to as a terminal, a mobile station, a subscriber station, a remote terminal, a wireless terminal, a user device, or other terms with equivalent technical meanings, in addition to a UE.

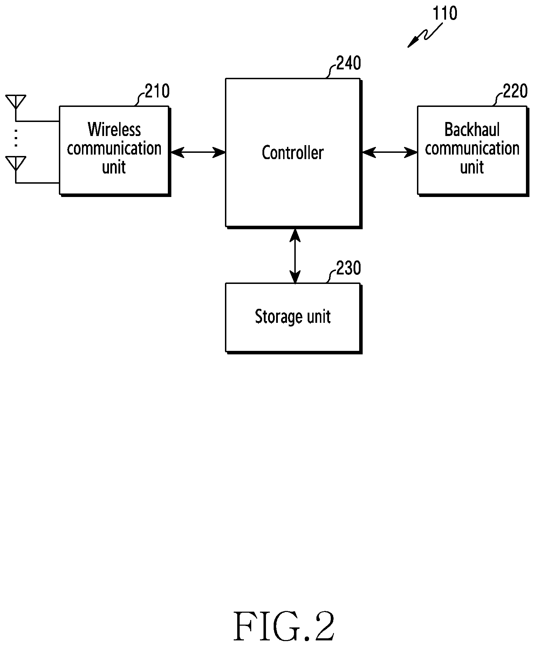

FIG. 2 illustrates the configuration of a base station in a wireless communication system according to various embodiments of the disclosure. The configuration illustrated in FIG. 2 may be construed as the configuration of the base station 110. The terms "unit", "-or/er", and the like used herein indicate a unit for processing at least one function or operation, which may be implemented as hardware, software, or a combination thereof.

Referring to FIG. 2, the base station includes a wireless communication unit 210, a backhaul communication unit 220, a storage unit 230, and a controller 240.

The wireless communication unit 210 performs functions for transmitting or receiving a signal through a wireless channel. For example, the wireless communication unit 210 performs a function of conversion between a baseband signal and a bit stream according to the physical-layer specification of a system. For example, in data transmission, the wireless communication unit 210 encodes and modulates a transmitted bit stream to generate complex symbols. Further, in data reception, the wireless communication unit 210 demodulates and decodes a baseband signal to reconstruct a received bit stream.

The wireless communication unit 210 upconverts a baseband signal into a radio-frequency (RF) band signal, and may transmit the RF band signal through an antenna. The wireless communication unit 210 downconverts an RF band signal, received through the antenna, into a baseband signal. To this end, the wireless communication unit 210 may include a transmission filter, a reception filter, an amplifier, a mixer, an oscillator, a digital-to-analog converter (DAC), an analog-to-digital converter (ADC), or the like. Further, the wireless communication unit 210 may include a plurality of transmission/reception paths. In addition, the wireless communication unit 210 may include at least one antenna array including a plurality of antenna elements.

From the aspect of hardware, the wireless communication unit 210 may include a digital unit and an analog unit, and the analog unit may include a plurality of sub-units according to operating power, operating frequency, or the like. The digital unit may be configured as at least one processor (e.g., a digital signal processor (DSP)).

As described above, the wireless communication unit 210 transmits and receives a signal. Accordingly, part or all of the wireless communication unit 210 may be referred to as a transmitter, a receiver, or a transceiver. In the following description, transmission and reception performed through a wireless channel are construed as including processing performed as described above by the wireless communication unit 210.

The backhaul communication unit 220 provides an interface for communication with other nodes in a network. That is, the backhaul communication unit 220 converts a bit stream, which is transmitted from the base station to another node, for example, another access node, another base station, a higher node, a core network, or the like, into a physical signal, and converts a physical signal, which is received from another node, into a bit stream.

The storage unit 230 stores data, such as a default program, an application, and setting information, for the operation of the base station. The storage unit 230 may be configured as volatile memory, nonvolatile memory, or a combination of volatile memory and nonvolatile memory. The storage unit 230 provides the stored data in response to a request from the controller 240.

The controller 240 controls the overall operation of the base station. For example, the controller 240 transmits and receives a signal through the wireless communication unit 210 or the backhaul communication unit 220. Further, the controller 240 records and reads data in the storage unit 230. The controller 240 may perform functions of a protocol stack required by communication standards. According to another embodiment, the protocol stack may be included in the wireless communication unit 210. To this end, the controller 240 may include at least one processor.

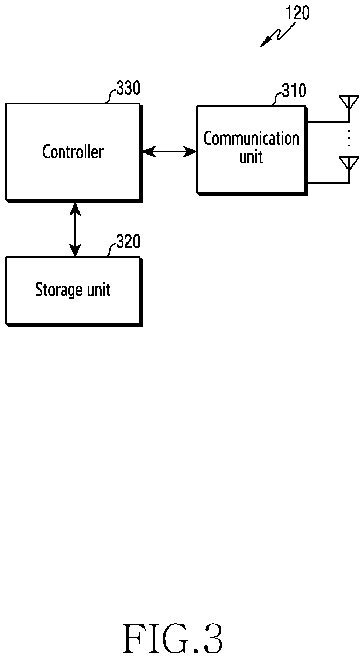

FIG. 3 illustrates the configuration of a UE in a wireless communication system according to various embodiments of the disclosure. The configuration illustrated in FIG. 3 may be construed as the configuration of the UE 120. The terms "unit", "-or/er", and the like used herein indicate a unit for processing at least one function or operation, which may be implemented as hardware, software, or a combination thereof

Referring to FIG. 3, the UE includes a communication unit 310, a storage unit 320, and a controller 330.

The communication unit 310 performs functions for transmitting or receiving a signal through a wireless channel. For example, the communication unit 310 performs a function of converting between a baseband signal and a bit stream according to the physical-layer specification of a system. For example, in data transmission, the communication unit 310 encodes and modulates a transmitted bit stream to generate complex symbols. Further, in data reception, the communication unit 310 demodulates and decodes a baseband signal to reconstruct a received bit stream. The communication unit 310 upconverts a baseband signal into an RF band signal and transmits the RF band signal through an antenna. The communication unit 310 downconverts an RF band signal, received through the antenna, into a baseband signal. For example, the communication unit 310 may include a transmission filter, a reception filter, an amplifier, a mixer, an oscillator, a DAC, an ADC, or the like.

Further, the communication unit 310 may include a plurality of transmission/reception paths. In addition, the communication unit 310 may include at least one antenna array including a plurality of antenna elements. From the aspect of hardware, the communication unit 310 may include a digital circuit and an analog circuit (e.g., a radio frequency integrated circuit (RFIC)). Here, the digital circuit and the analog circuit may be configured as a single package. Further, the communication unit 310 may include a plurality of RF chains. The communication unit 310 may perform beamforming.

As described above, the communication unit 310 transmits and receives a signal. Accordingly, part or the entirety of the communication unit 310 may be referred to as a transmitter, a receiver, or a transceiver. In the following description, transmission and reception performed through a wireless channel are construed as including processing performed as described above by the communication unit 310.

The storage unit 320 stores data, such as a default program, an application, and setting information, for the operation of the UE. The storage unit 320 may be configured as volatile memory, nonvolatile memory, or a combination of volatile memory and nonvolatile memory. The storage unit 320 provides the stored data in response to a request from the controller 330.

The controller 330 controls the overall operation of the UE. For example, the controller 330 transmits and receives a signal through the communication unit 310. Further, the controller 330 records and reads data in the storage unit 320. The controller 330 may perform functions of a protocol stack required by communication standards. To this end, the controller 330 may include at least one processor or microprocessor, or may be configured as a part of a processor. Part of the communication unit 310 and the controller 330 may be referred to as a communication processor (CP).

Various embodiments of the disclosure relate to a method for providing AR split rendering.

Related standards for various embodiments of the disclosure are as follows:
- 3GPP SA4 Media Capability of AR (MeCAR, TS 26.119)
- 3GPP SA4 5G Media Streaming Architecture (TS 26.501, 26.511, 26.512)
- MPEG-I Scene description (ISO/IEC 23090-14)
- Khronos glTF 2.0

The related art has the following problems with respect to various embodiments of the disclosure.
1. It is necessary to resolve a UE performance issue in a service providing media (e.g., 3D graphic content) that requires higher processing performance than the processing performance of a UE.
2. To solve the UE performance issue, a technology (split rendering) in which a server processes a process and transmits the result (e.g., a 2D rendered video) to a UE may be used. Business examples include a cloud game, such as MS xCloud.
3. However, when applying split rendering to AR, the result of split rendering may be received late compared to a user's movement. When time (motion to photon, MTP) from the user's movement to the reception of the result exceeds 50 ms, AR, i.e. augmented reality, may not sufficiently achieve purposes.
4. To solve the foregoing problem, a time warping or late stage reprojection (LSR) technology may be used in which the server receives pose information about the UE (e.g., AR glasses) attached to the user, determines actual server-UE MTP (e.g., 300 ms), and predicts the future pose (position + gaze direction) of the user after offset time for offsetting the difference (e.g., 290 ms) between the expected MTP (e.g., 10 ms) and the actual MTP. This technology includes a method of correcting the difference in pose by performing plane-plane transformation (warping) on a received 2D image plane to a plane viewed from the final pose of the user.
5. However, in an actual application process, latency occurring in a server-UE communication process highly fluctuates, making it difficult to predict the actual MTP and also difficult to predict the future pose of the user. In addition, the plane-plane transformation may cause a significant distortion of a stereoscopic effect in the transformation of stereoscopic content.

Regarding the foregoing problems, solutions according to various embodiments of the disclosure are as follows.

To address the foregoing problems of the related art, various embodiments of the disclosure propose a solution that:
A. is robust to an error in predicting the future pose of a user;
B. is robust to the fluctuation of latency occurring in a transmission process between a server and a UE; and
C. reduces a distortion of stereoscopic effect caused by plane transformation in correcting the final pose of a user.

Various embodiments of the disclosure provide the following solutions.

Various embodiments of the disclosure describe a pose of a user in a space predicted by a UE and a server, geometric information projected from the predicted pose, and a two-dimensional image as a rendering result processed by the server by using a scene description (SD) technology.

Various embodiments of the disclosure describe a two-dimensional image as a rendering result of a server as a combination of primitive components (e.g., a point, a line, and a triangle) as geometric information in a three-dimensional space, and describe which part of the two-dimensional image the surface texture of the primitive components is mapped to by using the scene description technology.

Various embodiments of the disclosure includes a binary encoded and embedded for a two-dimensional image, or reference link information, an animation node, and a scene node for each predicted pose in a scene description, includes a camera node and mesh nodes under the scene node, and includes texture nodes among nodes under the mesh nodes.

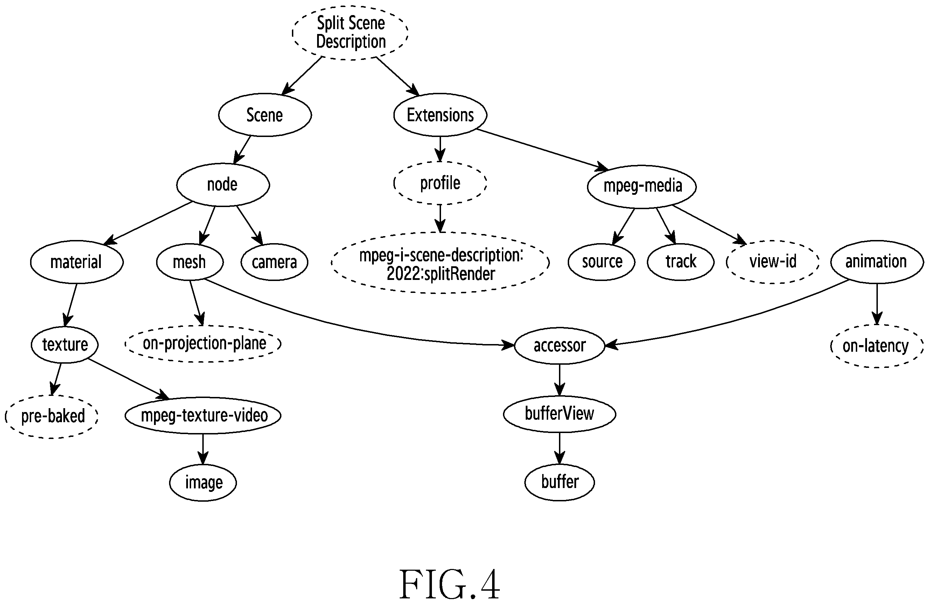

FIG. 4 illustrates an example of a glTF 2.0 node tree structure in a wireless communication system according to various embodiments of the disclosure.

A scene node maps a pose of a user in a space predicted by a server to a camera node, provides information about a two-dimensional projection plane on which three-dimensional content is projected in the pose, and includes a description of primitive components positioned on a three-dimensional or two-dimensional plane, the primitive components are connected to texture nodes, and the texture nodes include pieces of two-dimensional coordinate information of a two-dimensional image included or referenced in a scene description. An animation node includes description information about how the content of a scene at a first time described in the scene description changes during temporal progression to a second time.

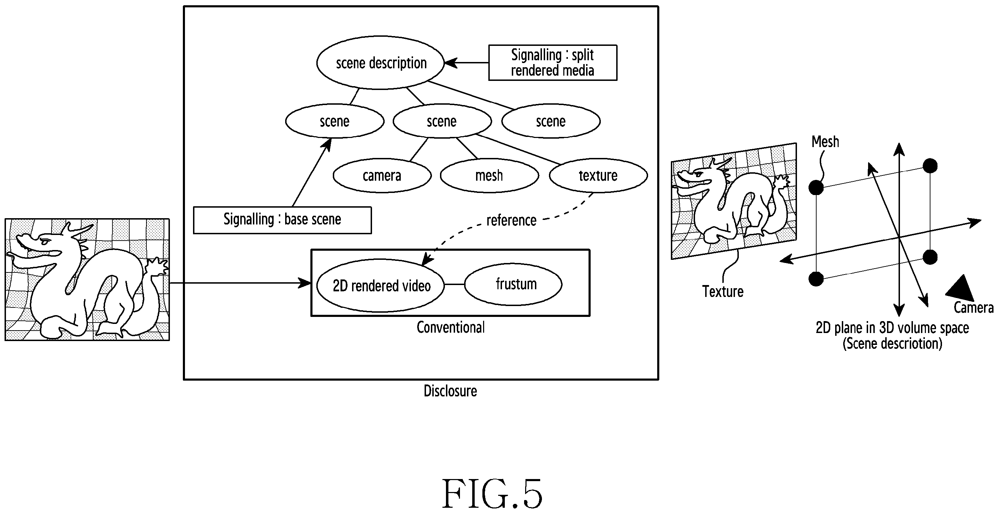

FIG. 5 illustrates an example of scene description mapping of an image and a pose in a wireless communication system according to various embodiments of the disclosure.

Various embodiments of the disclosure include one scene node for each user pose prediction candidate to provide change information about a two-dimensional image for each of one or more user pose prediction candidates predicted by a server.

Various embodiments of the disclosure include, in a scene description, profile information, a flag indicating that a two-dimensional image may be wholly used for one of scene nodes, a flag indicating whether a primitive component included in a mesh node is positioned on a two-dimensional projection plane, a flag allowing exclusion of an operation for some processes in a graphics render pipeline, a flag determining whether to use an animation node according to the flow of time, and a view-id, which is an identifier for indication when referring to a specific view when using multiview video coding.

Node names and subnodes expressed in various embodiments of the disclosure are described based on glTF 2.0 and an MPEG-I scene description among scene description technologies used in related industries, and may thus be mapped to and used with similar ones according to the types and roles of nodes and a relationship between nodes supported in other scene description technologies when applied to the other scene description technologies with different hierarchies and different node names and roles.

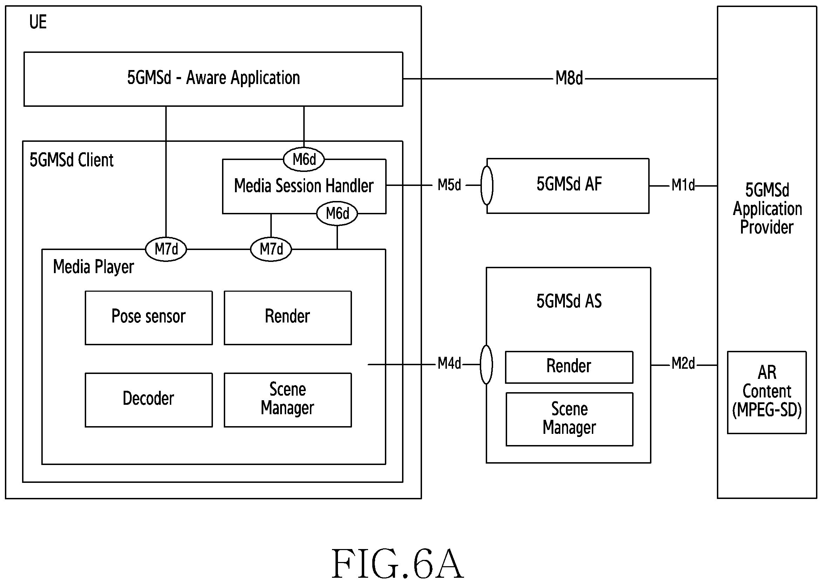

FIG. 6A illustrates an example of a UE-server- application provider (AP) structure in a wireless communication system according to various embodiments of the disclosure.

### [System configuration]

Various embodiments of the disclosure includes an information exchange among a content/app/service provider (application provider, AP) that provides an AR split rendering service, a network service provider (operator), and a network service participating UE (client).

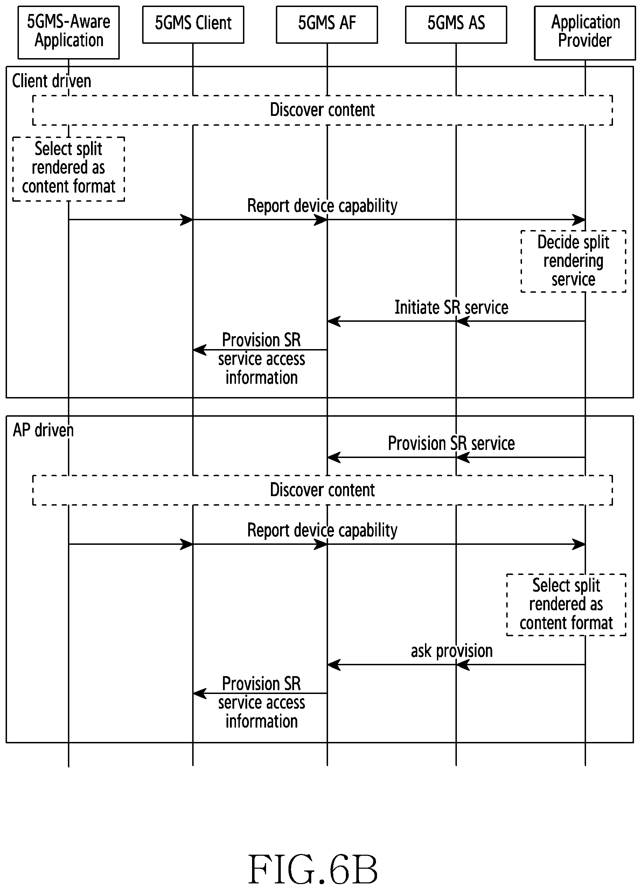

FIG. 6B is a flowchart illustrating an example of a method and procedure for providing a service in a wireless communication system according to various embodiments of the disclosure.

A content service provider identifies whether a service to be provided is supported by a network server of a network service provider. A simple service providing method and procedure are as follows. A content service may be initiated in the following order: a UE accesses a network service, browses accessible content, selects the format of content to be provided as split rendered media, and reports the performance of the UE and surrounding environment information; and an AR split rendering service provider determines to initiate an AR split rendering service and transmits information for receiving the service to the UE (client-driven method). Alternatively, a content service may be initiated in the following order: the UE accesses a network service with the initialization of the service of the service provider completed, browses and selects accessible content, and reports the performance of the UE and surrounding environment information; and the AR split rendering service provider (AP) selects the format of content to be provided as split rendered media and provides information for initiating an AR split rendering service (AP driven method).

The AR split rendering service is executed on the server (i.e., an application server) of the network service provider, collects pose information or pieces of predicted pose information from the UE, predicts pose information about the UE in the near future by using the information, and converts AR content provided by the AP into a low-complexity scene description by using the predicted pose information. A scene description refers to a content format that allows components forming three-dimensional content to be arranged in a three-dimensional space and to be output as a user-desired result (e.g., a two-dimensional image for two-dimensional display) through processing by a scene description player or graphic renderer.

### [Provision of split rendering media using scene description]

A scene description according to various embodiments of the disclosure describes a pose of a user in a space predicted by a server and a two-dimensional image that is a rendering result processed by the server. Although a scene description may generally provide information about a viewpoint from which three-dimensional content is rendered using a camera node, a description of the information is not mandatory, and the use of the information is not mandatory when the information is described. Various embodiments of the disclosure describe a user future pose prediction candidate predicted using a single node by a UE or a split rendering server, and an example of the node may be a camera node. Further, the split rendering server positions a two-dimensional image, which is a result generated using the pose prediction candidate, on a projection plane of the camera node.

Various embodiments of the disclosure describe a two-dimensional image, which is a result of split rendering, as a combination of mesh triangles, which are primitive components in a three-dimensional space, and describe how part of the two-dimensional image is mapped as the texture of the mesh triangles by using the scene description technology.

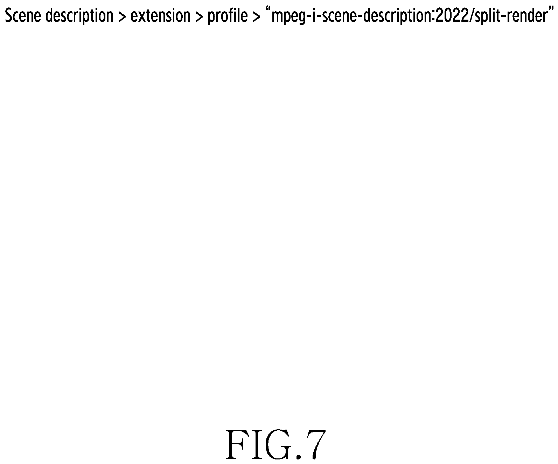

FIG. 7 illustrates an example of a profile identification method in a wireless communication system according to various embodiments of the disclosure.

### [Profile]

A scene description and a service and UE using the same according to various embodiments of the disclosure are distinguished by separate identifiers, an example of the identifiers is generated and executed using the following rules, and whether to support or comply with the rules is provided and identified as profile information. In an embodiment, a profile node is provided as a subnode of the scene description, and a profile expression scheme and a value belonging to the scheme are described as attribute values of the profile node. In an embodiment, the profile node may be newly established under the scene description, a scheme, such as "mpeg-i-scene-description:2022", may be described as an attribute value of the profile node, and "split-render" may be described as a dependent value of the scheme.

Various embodiments of the disclosure include embedded binary or reference information about one or more two-dimensional images or videos, one or more animation nodes, and one or more scene nodes in a scene description, includes one or more camera nodes and one or more mesh nodes under each scene node, and includes one or more texture nodes among subnodes of each mesh node. A UE, a network server, or an AP that supports a profile identified as following the disclosure and is capable of generating or executing a compatible scene description operates according to rules described in the disclosure.

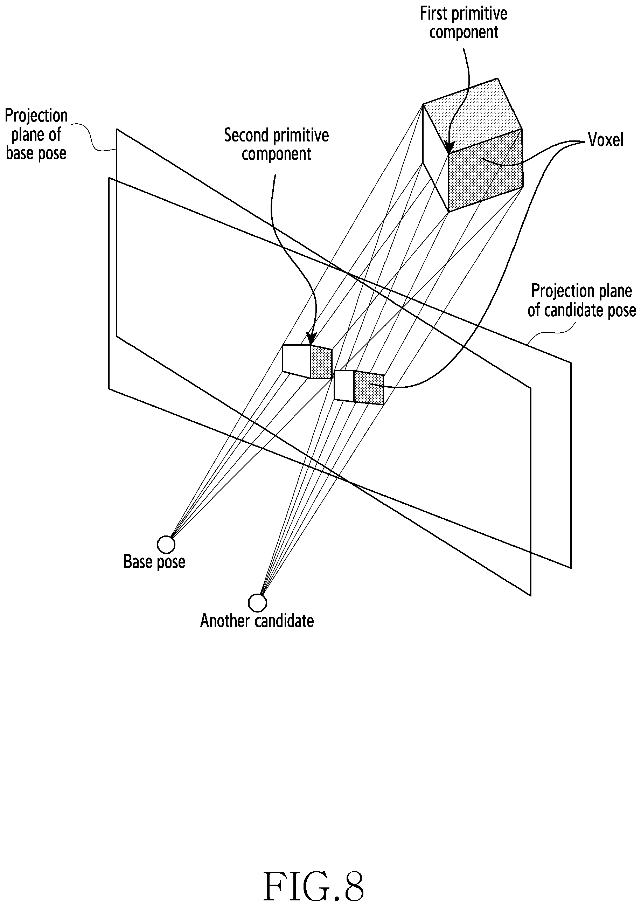

FIG. 8 illustrates an example of three-dimensional stereoscopic content, a UE prediction pose, and a projection plane in a wireless communication system according to various embodiments of the disclosure.

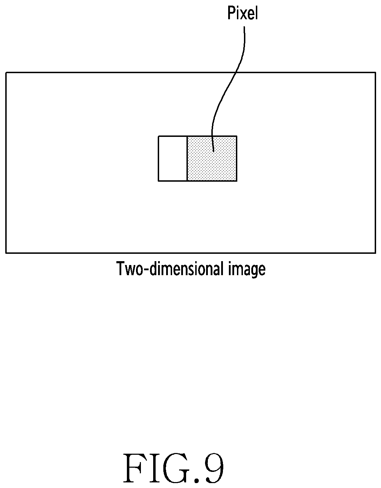

FIG. 9 illustrates an example of a two-dimensional image in a wireless communication system according to various embodiments of the disclosure.

### [Scene/camera node]

Each scene node has one camera node, and the camera node describes information about a UE pose in a user's space predicted by a UE or server. The camera node includes the position of a camera in a three-dimensional space and information about a direction in the three-dimensional space. The camera node includes frustum information, such as the field of view (FoV) in the up/down and left/right directions, aspect ratio, and an included depth range (z-near and z-far). The camera node provides information about a two-dimensional projection plane on which three-dimensional content is projected. A single plane that includes the z-near point of the camera node or a separately designated projection plane depth point and is orthogonal to the camera node in a normal direction is a projection plane for the camera node.

### [Mesh/texture node]

A mesh node includes a description of first and second primitive components positioned on a three-dimensional or two-dimensional plane, and the primitive components are connected to texture nodes, and the texture nodes include two-dimensional coordinate information about a two-dimensional image included or referenced in a scene description.

The two-dimensional image is generated by positioning the second primitive component at a point where the eyesight connecting each point of the first primitive component positioned in a three-dimensional space and the pose of the camera node (i.e., a base pose or another candidate pose of FIG. 8) intersects with a projection plane of a camera node. The generated two-dimensional image is used as the texture of the mesh node of the second primitive component positioned on the projection plane. For the same two-dimensional image, the position and mapping result of texture referenced and used in a mesh node of the base pose are different from the position and mapping result of texture referenced and used in a mesh node of the other candidate pose. That is, as shown in FIG. 8, the darkest surface of a cube, which is an object in a three-dimensional space, is mapped to a mesh node with a smaller area than a white surface on a projection plane with respect to the base pose, but is mapped to a mesh node with a larger area than the white surface on a projection plane with respect to the other candidate pose.

Pieces of voxel information on a projection plane are stored as pixels of a two-dimensional image. When a primitive component forming original three-dimensional content is referred to as a first primitive component, each vertex of the first primitive component is projected onto the surface of the projection plane and generated as a second primitive component, and the first primitive component and the second primitive component are described in a scene description, which is the result of AR split rendering transmitted to a UE. When primitive components of a mesh node are second primitive components, an on-projection-plane node, which is a flag indicating whether the primitive components included in the mesh node are positioned on a two-dimensional projection plane, is described, and an attribute value of the node is "True". In this case, the two-dimensional image is used as resource information referenced by a texture node, and the texture node is described and mapped as surface information of each of the first and second primitive components of the mesh node.

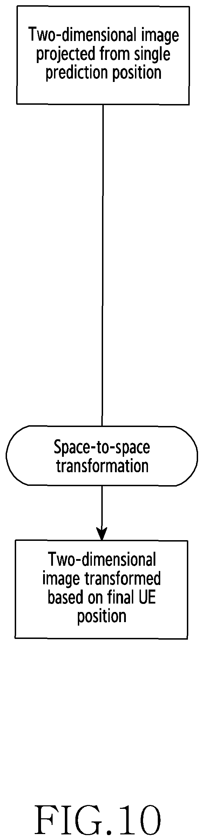

FIG. 10 illustrates an example of space-to-space transformation in a wireless communication system according to various embodiments of the disclosure.

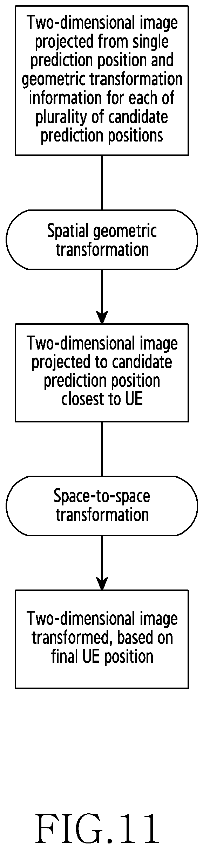

FIG. 11 illustrates an example of space-to-space transformation after spatial geometric transformation in a wireless communication system according to various embodiments of the disclosure.

### [Provision of plurality of pieces of predicted pose information]

An AR split rendering service provider and a network server according to various embodiments of the disclosure have a plurality of scene nodes for a plurality of poses in providing a split rendering result according to the pose of a user in a near future time. A UE and the server may continuously obtain pose information about the user, and may predict the pose of the user at an arbitrary time from the present to the future, based on a pose record from the past to the present. The UE and the server operate one or more user movement models, evaluate the models, based on consistency with an updated user pose, and have scene nodes for the predicted pose values of models having a relatively high hit rate among the models.

Among the plurality of scene nodes provided using a scene description according to the disclosure, a scene node displayed in a specific order (e.g., first) or by a separate flag embeds or references a camera node and mesh nodes for a user pose predicted with the highest probability, and a two-dimensional image that is a rendering result in the pose. The scene node may be used without texture mapping transformation to a projection plane for the two-dimensional image. The other candidate scene nodes provide other camera information, that is, information about other predicted user poses.

The UE according to the disclosure first reads the scene nodes in the scene description, reads camera information in the scene nodes, and selects a scene node having camera information closest to the current position of the UE. First primitive components may be selected in the order of highest performance depending on the performance of the UE, a scene node closest to the final pose among second primitive components may be selected, or a scene node with a higher probability may be selected to output a result. Since scene nodes of the second-highest probability have first or second primitive components of different shapes, sizes, and positions compared to a scene node of the highest probability, the shape of the two-dimensional image mapped to the projection plane changes, and accordingly the rendering result changes. Since the first or second primitive components may have different values depending on the scene node, it may be expected that a two-dimensional image reflecting the spatial geometric characteristics of original AR content according to the posed of the user is derived.

Although it is difficult to predict a future user pose in the related art, when a plurality of scene nodes is provided and information for deriving a spatially geometrically accurate image from a two-dimensional image is provided according to various embodiments of the disclosure, it is not necessary to transmit as many two-dimensional images as the number of predictions while expanding a prediction range for a user pose, and thus efficient information transmission is possible. In addition, when a two-dimensional plane generated by spatial geometrical transformation with each predicted pose is transformed plane to plane to the final user pose, it is possible to reduce a spatial geometric distortion compared to performing conventional plane-to-plane transformation from a single two-dimensional plane.

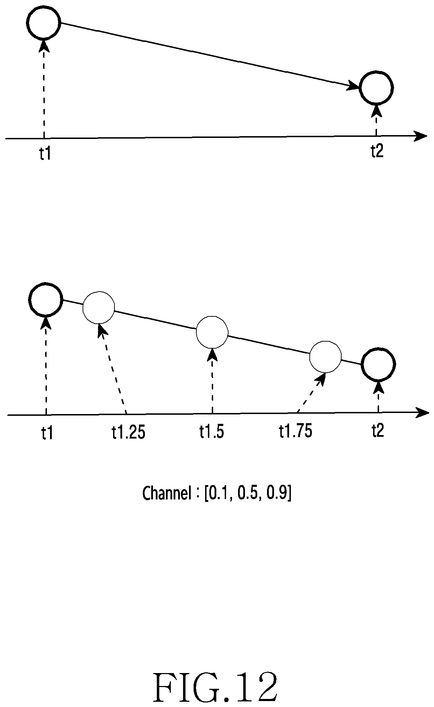

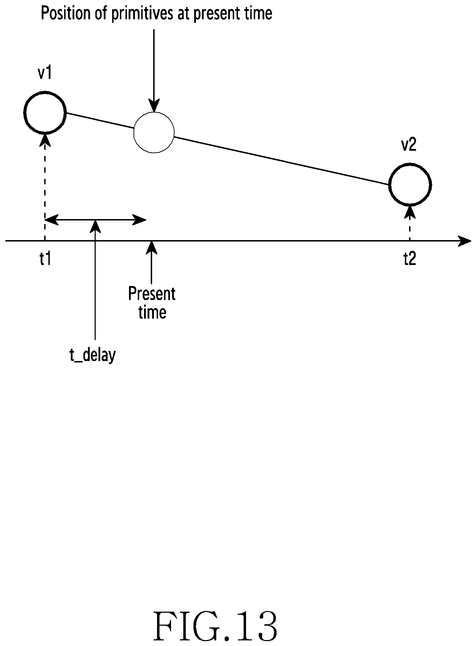

FIG. 12 illustrates an example of the operation of an animation node in a wireless communication system according to various embodiments of the disclosure. FIG. 13 illustrates an example of the operation of an animation node when latency occurs in a wireless communication system according to various embodiments of the disclosure.

### [Provision of transmission delay response information]

An AR split rendering service provider and a network server according to various embodiments of the disclosure may predict one or more transmission latencies in predicting time (timestamp) when a split rendering result is transmitted and becomes available in the UE. Just as a plurality of user pose candidates provide different pieces of spatial geometric mapping information for one temporal pose, different spatial geometric mappings and different two-dimensional images may be required for a plurality of temporal positions. To this end, the server may apply a plurality of arbitrary future times to a user movement model to obtain predicted poses of the user for the respective future times. When the server knows a temporal change in content, the server may render a result with the temporal change in the content applied in the predicted pose of the user for each future time, thereby generating two-dimensional images with different spatial geometric mappings for the plurality of temporal positions.

To provide different spatial geometric mappings for a plurality of temporal positions, various embodiments of the disclosure provide an animation node and an on-latency flag. In the related art, an animation node includes description information about how the content of a scene at a first time (timestamp) described in a scene description changes during temporal progression to a second time. In the second time, primitive components may change in position, size, reference texture, and the like. The interval between the first time and the second time may be equal to or greater than the time interval between one image frame and the next image frame in the related art. When one information value (e.g., a coordinate) of the first time is described as a different value at the second time, the value of information linearly changes over time. In addition, when a channel node is described, a channel includes variance information about the amount of information for each step, and the value of the information linearly changes in a section corresponding to each step by dividing time flow by the number of steps of the channel.

When the value of the on-latency flag is configured to True in the animation node, the UE applies the content of the animation node only when a transmission delay occurs. When the on-latency flag is configured, the UE maintains the last received scene description in a reception buffer until receiving a new scene description. When the last received scene description is a version (v1) for the first time (t1) and includes an animation node capable of generating the second time (t2) and a transmission delay occurs when the value of the on-latency flag is True, the UE selects a scene node closest to the final pose of the current UE among scene nodes of the v1 scene description, and animate the scene node to correspond to a time amount of t_delay, which is the time difference from time t1 to the present time, to change and render the positions and sizes of primitive components, thereby deriving a version for the present time. In the related art, when a transmission delay occurs, a quality distortion, such as a stoppage of a frame or plane-to-plane transformation of a previously received image, is unavoidable. However, according to various embodiments of the disclosure, it is possible to obtain the most similar result from available information by providing spatial geometric correction information according to the passage of time.

### [Mitigation of complexity of render pipeline]

The reason why a UE determines to use a split rendering service is because the performance of the UE is not sufficient to execute AR content. When a UE according to various embodiments of the disclosure receives a scene description from a server, a processing load problem for processing the scene description may occur again.

To reduce the processing load of a render pipeline implemented in the UE, various embodiments of the disclosure provide a resource so that some processes of the render pipeline implemented in the UE may be excluded or the load may be reduced. A primitive component is processed by a CPU and forwarded to a GPU. In various embodiments of the disclosure, when first primitive components positioned in a three-dimensional stereoscopic space are transformed into second primitive components positioned on the same projection plane, second primitive components that are adjacent and have the same transformation direction (e.g., depth and size) are merged. When the primitive components are merged, performance requirements required for processing by the CPU may be reduced. In a case of texture, after texture is positioned in a three-dimensional space, light is blended by factors, such as brightness, reflection, transparency, and material, by the effect of light reflected from a light source and surrounding textures. Since the more light effects are processed in a blend process, the more natural an image is obtained, the blend process is a representative process in which a performance bottleneck occurs in the UE.

In various embodiments of the disclosure, the result of the blend process rendered in each predicted pose is provided as a texture resource. With each scene node having one camera node, and three-dimensional content is transformed into second primitive components to be projected onto the camera node and connected to parts of a two-dimensional image, and thus the UE may generate a result in which all light effects are processed simply by forming a scene from the two-dimensional image. Since the number of primitive components is reduced, no separate instructions are required. For texture, a new extension node of pre-baked is inserted under the texture or material node to indicate that blending has already been applied, and the attribute value of the node is indicated as "True". The UE may use texture identified as pre-baked as it is without applying blending, lighting, and the like among rendering processes.

### [Scene description extension information]

A scene description according to various embodiments of the disclosure has the following extension nodes.

The scene description according to the node generation rules and the mapping method of the split rendering result proposed in various embodiments of the disclosure has a profile node, which is a new extension node, and a profile attribute value. (FIG. 2)

When a primitive component included in a mesh node is a second primitive component generated to be positioned on a two-dimensional projection plane, the scene description has an on-projection-plane node, which is a new extension node, under the mesh node, and the attribute value of the node of "True".

When the resource of a scene description generated by the server is generated to be excluded from the rendering process of the UE, the scene description has "True" as the attribute value of a new extension node of pre-baked under a texture node or material node.

The scene description has an on-latency node, which a new extension node, that determines whether to use an animation node according to the passage of time when transmission is delayed and an attribute value of "True".

When using multiview video coding for compressing a two-dimensional image used as texture, a view-id is provided as an identifier for indication when referencing a specific view as texture among a plurality of views of a corresponding video stream.

Node names and subnodes expressed in various embodiments of the disclosure are described based on glTF 2.0 and an MPEG-I scene description among scene description technologies used in related industries, and may thus be mapped to and used with similar ones according to the types and roles of nodes and a relationship between nodes supported in other scene description technologies when applied to the other scene description technologies with different hierarchies and different node names and roles.

3GPP TS26.565 is a standard for the format of media exchanged between a server and a UE, and may be extended as shown in Table 1 to support a split rendering server and a UE following the disclosure.

**[Table 1]**

| |
|---|
| A scene description document may be used to describe the split rendered media such as 2D video stream as the texture resource of a planar object such as a rectangle in a volume space whose size and position corresponds to the field of view for the estimated pose. The scene description document describes multiple *scene* nodes which of eachhas a *camera* node for the pose, *mesh* nodes for the planar object and *texture* nodes for mapping of the mesh nodes to the portion of the 2D video. |
| A split rendered 2D video for a pose may be re-used as the texture resource for the other poses. For the purpose, a scene description document may describe multiple poses by having multiple scene nodes which of each refers the portion of the 2D video as the texture of mesh nodes comprising the field of view in each scene. |
| The default or the most probable pose may refer whole of the 2D video as the texture of a simple rectangle that covers whole field of view. For the other poses, the field of view may consist of smaller mesh nodes which of each refers to a different portion of the 2D video. This is because the differences in the position of the poses may cause differences of portion at which each vertex of 3D objects is projected onto the projection plane changes. |
| A device may parse the scene description document then may decide to which scene it renders. The scene node with the original scene description may require the highest computing power, while the scene nodes with the camera node closest to the latest pose of the device may require the lesser computing power, and the scene node with the default pose may require the least computing power, relatively. |
| The split rendered 2D video may be specified as *pre-baked* to allow the device to omit the blending process from its render pipeline in case the split rendering server has performed the blending process to generate the 2D video. |
| The video codec which correlates multiple views such as scalable codec or multiview codec may be occupied to encode split rendered 2D video to deliver pixel accurate texture for each pose. A scene description having multiple scene nodes with texture nodes referring to a multiple views may specify *view id* of the 2D video. |

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof. For example, it will be apparent that all or a part of a particular embodiment may be combined with all or a part of one or more other embodiments, which also falls within the scope of the disclosure.

## Claims

1. A method performed by a terminal in a wireless communication system, the method comprising:
receiving, from a server, a scene description comprising information about a plurality of poses and a plurality of pieces of spatial geometric information corresponding to the plurality of poses;
determining a pose closest to a final pose of the terminal among the plurality of poses;
generating an image, based on spatial geometric information corresponding to the determined pose; and
outputting the generated image.

2. The method of claim 1, wherein the generating comprises generating the image by warping a result of rendering, based on the spatial geometric information, a pose closest to an object with the determined pose.

3. The method of claim 1, wherein the outputting comprises outputting the generated image at a point where an eyesight connecting the determined pose and an object intersect with a projection plane.

4. The method of claim 1, wherein the scene description further comprises a mesh node and a texture node for each pose, and
wherein the texture node represents two-dimensional image information and frustum information as texture for the mesh node.

5. The method of claim 4, wherein the texture node comprises pre-baked information indicating that blending has been completed by the server, and
wherein the outputting comprises outputting the image without performing blending on the image according to the pre-baked information.

6. The method of claim 1, wherein the scene description further comprises an animation node, and
wherein the method further comprises outputting an updated image according to the animation node when another scene description is not received until a predetermined time after receiving the scene description.

7. The method of claim 1, wherein the scene description follows a tree structure of a GL transmission format (glTF).

8. A terminal in a wireless communication system, the terminal comprising:
a transceiver; and
a controller connected to the transceiver,
wherein the controller is configured to:
receive, from a server, a scene description comprising information about a plurality of poses and a plurality of pieces of spatial geometric information corresponding to the plurality of poses;
determine a pose closest to a final pose of the terminal among the plurality of poses;
generate an image, based on spatial geometric information corresponding to the determined pose; and
output the generated image.

9. The terminal of claim 8, wherein the controller is further configured to generate the image by warping a result of rendering, based on the spatial geometric information, a pose closest to an object with the determined pose.

10. The terminal of claim 8, wherein the controller is further configured to output the generated image at a point where an eyesight connecting the determined pose and an object intersect with a projection plane.

11. The terminal of claim 8, wherein the scene description further comprises a mesh node and a texture node for each pose, and
wherein the texture node represents two-dimensional image information and frustum information as texture for the mesh node.

12. The terminal of claim 11, wherein the texture node comprises pre-baked information indicating that blending has been completed by the server, and
wherein the controller is further configured to output the image without performing blending on the image according to the pre-baked information.

13. The terminal of claim 8, wherein the scene description further comprises an animation node,
wherein the controller is further configured to output an updated image according to the animation node when another scene description is not received until a predetermined time after receiving the scene description, and
wherein the scene description follows a tree structure of a GL transmission format (glTF).

14. A method performed by a server in a wireless communication system, the method comprising:
generating information about a plurality of poses related to a predetermined object and a plurality of pieces of spatial geometric information corresponding to the plurality of poses to output an image to a terminal; and
transmitting a scene description comprising the information about the plurality of poses and the plurality of pieces of spatial geometric information to the terminal,
wherein the image is output based on spatial geometric information corresponding to a pose closest to a final pose of the terminal among the plurality of poses.

15. A server in a wireless communication system, the server comprising:
a transceiver; and
a controller connected to the transceiver,
wherein the controller is configured to:
generate information about a plurality of poses related to a predetermined object and a plurality of pieces of spatial geometric information corresponding to the plurality of poses to output an image to a terminal; and
transmit a scene description comprising the information about the plurality of poses and the plurality of pieces of spatial geometric information to the terminal, and
wherein the image is output based on spatial geometric information corresponding to a pose closest to a final pose of the terminal among the plurality of poses.
